# EUROPEAN PATENT APPLICATION

(11) **EP 2 012 332 A1**
(43) Date of publication of application: **07.01.2009**
(21) Application number: 07742340.8
(22) Date of filing: 25.04.2007
(51) Int. Cl.: H01H 11/00, B29D 19/00

(54) **METHOD OF PRODUCING KEY TOP FOR PUSH BUTTON SWITCH**

(30) Priority: 26.04.2006 JP 2006122603
(71) Applicant: Sunarrow Limited, Tokyo 104-0032 (JP)
(72) Inventor: YASUHARA, Takashi, Koga-shi, Ibaraki 306-0222 (JP)
(74) Representative: Vossius & Partner
(86) International application number: PCT/JP2007/058905
(87) International publication number: WO 2007/123251

(57) **Abstract**

A method of manufacturing key tops for push button switches is provided, which method includes the step of embossing three dimensional shapes formed in a first mold and/or a second mold into a resin member heated to a predetermined temperature by using the first mold and the second mold to integrally form the resin member into a sheet-like resin member including three dimensionally shaped key tops, with a predetermined gap provided between a first face and a second face of the three dimensionally shaped key top, which respectively face the first mold and the second mold.

## Description

### Technical Field

The present invention relates to a method of manufacturing key tops for push button switches of a cellular phone, a personal digital assistant (PDA), a remote controller or the like. More particularly, the invention relates to a manufacturing method capable of continuously manufacturing thin key tops for push button switches made of a synthetic resin.

### Background Art

Conventionally, push button switches of a cellular phone, a personal data assistant (PDA), a remote controller or the like are configured in such a way that a key sheet having key tops which becomes pressing parts and a key base formed of a resilient member such as silicone rubber is mounted on an internal circuit board of a cellular phone or the like, and a switching function is achieved by pressing the key top to open or close a circuit. Recently, as cellular phones or the like are miniaturized and become portable, there is an increasing demand of miniaturization, thinning and weight reduction of push button switches, particularly, key tops of a key sheet for push button switches.

To manufacture a key sheet including key tops for push button switches, integral molding is generally performed by injection molding with high accuracy of form, high dimensional accuracy, and high transfer accuracy to the mold's surface. For example, as a method of manufacturing a key sheet including thin key tops for push button switches to be manufactured by injection molding, there is proposed a method of manufacturing a key sheet including thin key tops for push button switches by integrally molding a resin film having a predetermined design printed thereon and a molten synthetic resin by injection molding (see Patent Document 1).
Patent Document 1: Japanese Patent Application Laid-Open No. 2002-197932

With regard to thinning of a key sheet, particularly, key tops to meet the recent miniaturization and portability of cellular phones or the like, however, it is difficult to achieve the desired thinning due to cracking and poor external appearance or the like caused by inadequate filling of a molten resin and occurrence of welds, originating from deterioration of the fluidity of the molten resin at the time of injection molding. With regard to the key tops for push button switches described in the Patent Document 1, though they are intended to be made thin, injection molding compels a manufacturing engineer to solve the defective molding inherent to the injection molding empirically or by intuition. Therefore, there is a demand for a simple method of manufacturing thin key tops for push button switches. Further, a shortening of the life cycle of cellular phones or the like, a diversity of designs, so forth lead to frequent design changes, so that there is a demand for a method of manufacturing thin key tops for push button switches, which can change designs easily and at a low cost.

### Disclosure of Invention

The present invention is made to solve the aforementioned problems, and it is an object of the invention to provide a method of manufacturing thin key tops for push button switches stably at a low cost and with an improved yield. It is another object of the invention to provide a method of manufacturing thin key tops for push button switches, which can be manufactured easily and continuously without requiring a fine adjustment in a molding process. It is a further object of the invention to provide a method of manufacturing thin key tops for push button switches, which can ensure design change with a minimum cost involved in the design change.

To achieve the above-mentioned objects, a method of manufacturing key tops for push button switches according to the present invention includes the step of embossing three dimensional shapes formed in a first mold and/or a second mold into a resin member heated to a predetermined temperature by using the first mold and the second mold to integrally form the resin member into a sheet-like resin member including three dimensionally shaped key tops, with a predetermined gap provided between a first face and a second face of the three dimensionally shaped key top, which respectively face the first mold and the second mold.

Specifically, a method of manufacturing key tops for push button switches includes the steps of:
heating a resin member to a first temperature with a heater;
embossing three dimensionally shapes formed in a first mold and/or a second mold into the resin member heated to the first temperature by using the first mold and the second mold to integrally form the resin member into a sheet-like resin member including three dimensionally shaped key tops;
cooling the integrally formed sheet-like resin member including the key tops to a predetermined second temperature;
forming slits at least partially along peripheries of the three dimensionally shaped key tops in the sheet-like resin member including the key tops, which is cooled to the second temperature; and
decorating the integrally formed sheet-like resin member including the key tops having the formed slits,
wherein the three dimensionally shaped key tops have a first face facing the first mold and a second face facing the second mold, with a predetermined gap provided between the first face and the second face.

### Brief Description of Drawings

Fig. 1A is a conceptual diagram of the step of heating a resin member 100 with heaters 110, 112.
Fig. 1B is a plan view of the resin member 100 which is heated in the heating step.
Fig. 2A is a conceptual diagram of the step of embossing into a sheet-like resin member 102 including three dimensionally shaped key tops 120 using molds 130, 140.
Fig. 2B is a plan view of the sheet-like resin member 102 including the three dimensionally shaped key tops 120 embossed in a molding step.
Fig. 3A is a diagram showing the sheet-like resin member 102 including the three dimensionally shaped key tops 120 having slits 150 formed along the peripheries of the key tops 120 in a slit forming step.
Fig. 3B is a plan view of the sheet-like resin member 102 including the three dimensionally shaped key tops 120 having the slits 150 formed in the slit forming step.
Fig. 4A is a diagram showing the key tops 120 separated from the sheet-like resin member 102 including the key tops 120 in a separation step.
Fig. 4B is a plan view of the key tops 120 separated in the separation step.
Fig. 5A is a plan view of key tops 120 for push button switches which are manufactured by a manufacture method according to a first embodiment of the invention.
Fig. 5B is a front view of the key tops 120 for push button switches which are manufactured by the manufacture method according to the first embodiment of the invention.
Fig. 6A is a plan view of a resin member 202 including another type of key tops 220 for push button switches which are manufactured by the manufacture method according to the first embodiment of the invention.
Fig. 6B is a front view of the resin member 202 including another type of key tops 220 for push button switches which are manufactured by the manufacture method according to the first embodiment of the invention.
Fig. 7A is a plan view of a resin member 302 including key tops 320 for push button switches which are manufactured by the manufacture method according to a second embodiment of the invention.
Fig. 7B is a front view of the resin member 302 including key tops 320 for push button switches which are manufactured by the manufacture method according to a second embodiment of the invention.

### Detailed Description of the Invention

### General Description

A method of manufacturing key tops for push button switches according to the present invention includes the steps of heating a resin member to a first temperature with a heater; embossing three dimensional shapes formed in a first mold and/or a second mold into the resin member heated to the first temperature by using the first mold and the second mold to integrally form the resin member into a sheet-like resin member including three dimensionally shaped key tops; cooling the integrally formed sheet-like resin member including the key tops to a predetermined second temperature; forming slits at least partially along peripheries of the three dimensionally shaped key tops in the sheet-like resin member including the key tops, which is cooled to the second temperature; and decorating the integrally formed sheet-like resin member including the key tops having the formed slits, wherein the three dimensionally shaped key tops have a first face facing the first mold and a second face facing the second mold, with a predetermined gap provided between the first face and the second face.

According to the above-described invention, the method includes the step of embossing three dimensional shapes formed in a first mold and/or a second mold into a resin member heated to a first temperature by using the first mold and the second mold to integrally form the resin member into a sheet-like resin member including three dimensionally shaped key tops, thus ensuring easy and stable integral formation of a sheet-like resin member including thin key tops for push button switches having the desired accuracy of form and dimensional accuracy without requiring fine adjustment in the molding process for overcoming defective molding inherent to the injection molding.

As the method includes the step of cooling the integrally formed sheet-like resin member including the key tops to a predetermined second temperature, the step of forming slits at least partially along peripheries of the three dimensionally shaped key tops in the sheet-like resin member including the key tops, and the step of decorating the integrally formed sheet-like resin member including the key tops having the formed slits, it is possible to accurately form slits along the peripheries of the key tops in the cooled sheet-like resin member including key tops. Therefore, slits can be formed along the peripheries of the sold-shaped key tops for push button switches while preventing the key tops from being separated from the sheet-like resin member. As a result, it is possible to integrally decorate a sheet-like resin member including key tops and easily separate the key tops from the sheet-like resin member after decoration.

When maximum slits are formed along the peripheries of the key tops for the purpose of preventing the key tops from being separated from the sheet-like resin member, it is possible to efficiently decorate even the side surfaces of the key tops as well as easily separate the key tops from the decorated sheet-like resin member. Even in a case where maximum slits are not formed along the peripheries of the key tops, if a link portion to link between a key top and the resin member is provided at one of the four sides of the key top along the periphery thereof and a slit is formed along the three sides of the key top excluding the link portion, for example, a resin member including key tops can be provided without separating the key top from the sheet-like resin member after decorating the resin member including key tops. This makes it possible to easily and stably manufacture a resin member including key tops as a key sheet including key tops tilt-able with respect to the sheet-like resin member with the link portion serving as a hinge mechanism, through a continuous sequence of steps.

Further, the resin member is heated, embossed using the first mold and the second mold to be integrally formed into a sheet-like resin member including three dimensionally shaped key tops, cooled, having slits formed at least partially along the peripheries of the three dimensionally shaped key tops, and decorated, thereby allowing a sheet-like resin member including thin key tops for push button switches having the desired accuracy of form and dimensional accuracy to be performed easily and stably through a continuous sequence of steps without requiring fine adjustment. This makes it possible to stably manufacture a sheet-like resin member including thin key tops for push button switches, thereby improving the yield and ensuring mass production at a low cost.

Further, unlike in injection molding, it can cope with the design change of thin key tops for push button switches by changing the three dimensional shapes of the key tops formed in the first mold and the second mold which are used in embossment, and the profile accuracy to align two sides of the injection molds with each other is not required. As compared with the injection molding, therefore, the cost for molding becomes lower, thereby ensuring a design change while minimizing the cost involved in the design change.

The "resin of the resin member" is not particularly limited, and publicly-known synthetic resins are suitably used. More specifically, publicly-known synthetic resins include polycarbonate resin, acrylic resin, styrene-based resin, olefin-based resin, modified resin thereof, and so forth. For key tops, translucent resins are preferable; specifically they include polypropylene resin, polymethyl methacrylate resin, polyethylene terephthalate resin, polybutylene terephthalate resin, polystyrene resin, polycarbonate resin, polyamide resin, and polyacrylonitrile-butylene-styrene resin, and particularly, polycarbonate resin is suitably used.

It is preferable that the method of manufacturing key tops for push button switches according to the invention should further include the step of separating the three dimensionally shaped key top from the decorated sheet-like resin member.

According to the invention, forming maximum slits along the peripheries of the key tops can allow the decorated key tops to be easily separated from the sheet-like resin member.

Another possible method of manufacturing key tops for push button switches according to the invention includes the steps of heating a resin member to a first temperature with a heater; embossing three dimensional shapes formed in a first mold and/or a second mold into the resin member heated to the first temperature by using the first mold and the second mold to integrally form the resin member into a sheet-like resin member including three dimensionally shaped key tops; and decorating the integrally formed sheet-like resin member including the key tops, wherein the three dimensionally shaped key tops have a first face facing the first mold and a second face facing the second mold, with a predetermined gap provided between the first face and the second face.

According to the above-described invention, a sheet-like resin member including thin key tops for push button switches molded without welds or the like inherent to injection molding can be performed, as a key sheet including key tops, easily and stably through a continuous sequence of steps.

It is preferable that in the method of manufacturing key tops for push button switches according to the invention, the first mold and the second mold should be heaters.

According to the above-described invention, as the first mold and the second mold are heaters, it is possible to heat and emboss the resin member to be integrally formed into a sheet-like resin member including three dimensionally shaped key tops and then decorate the resin member, so that a sequence of steps from heating to decoration can be executed continuously. This simplifies the work between the individual steps, ensures miniaturization of the apparatus, and makes it possible to stably manufacture a sheet-like resin member including thinned key tops for push button switches, thereby improving the yield and ensuring mass production at a low cost.

### Effects of the Invention

According to the above-mentioned invention, it is possible to manufacture a sheet-like resin member including thin key tops for push button switches having the desired accuracy of form and dimensional accuracy without requiring fine adjustment easily through a continuous sequence of steps by heating the resin member, embossing the resin member using the first mold and the second mold, integrally forming it into a sheet-like resin member including three dimensionally shaped key tops, and decorating the resin member. This makes it possible to stably manufacture a sheet-like resin member including thinned key tops for push button switches, thereby improving the yield and ensuring low-cost mass production.

Further, unlike in injection molding, it can cope with the design change of thin key tops for push button switches by changing the three dimensional shapes of the key tops formed in the first mold and the second mold which are used in embossment, and the profile accuracy to align two sides of the injection molds with each other is not required. As compared with the injection molding, therefore, the cost for molding becomes lower, thereby ensuring a design change while minimizing the cost involved in the design change.

### Description of Illustrated Embodiments

### «First Embodiment»

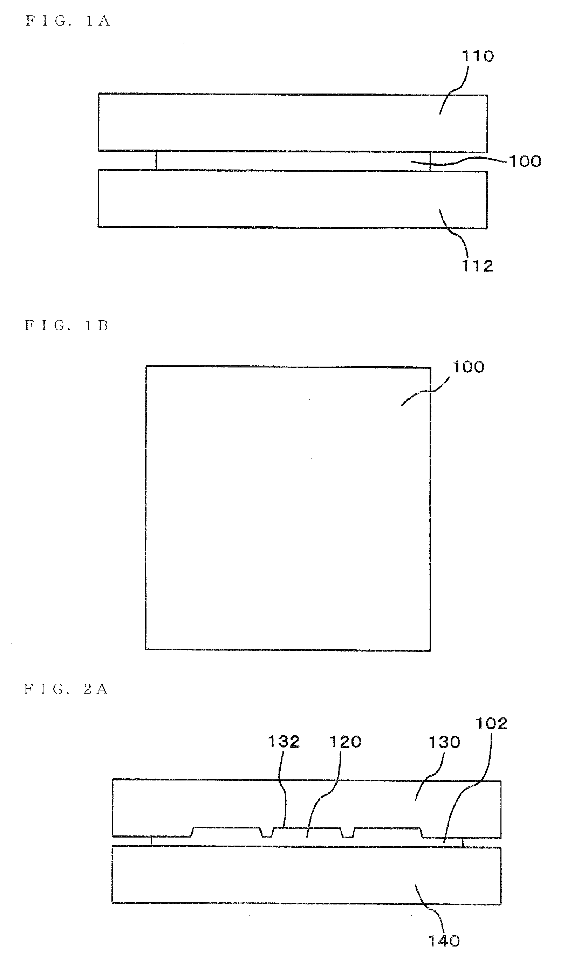

Referring to Figs. 1 to 4, a method of manufacturing key tops for push button switches according to the first embodiment of the invention will be described. The method of manufacturing key tops for push button switches according to the first embodiment of the invention is to manufacture thin key tops for push button switches without using an injection molding method by heating a sheet-like resin member 100, then performing embossing the resin member to be integrally formed into a sheet-like resin member 102 including three dimensionally shaped key tops 120.

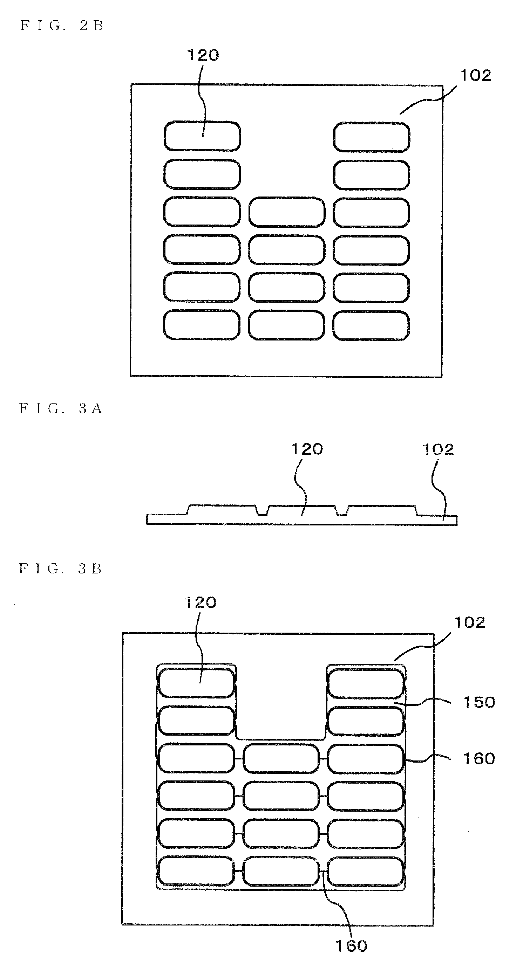

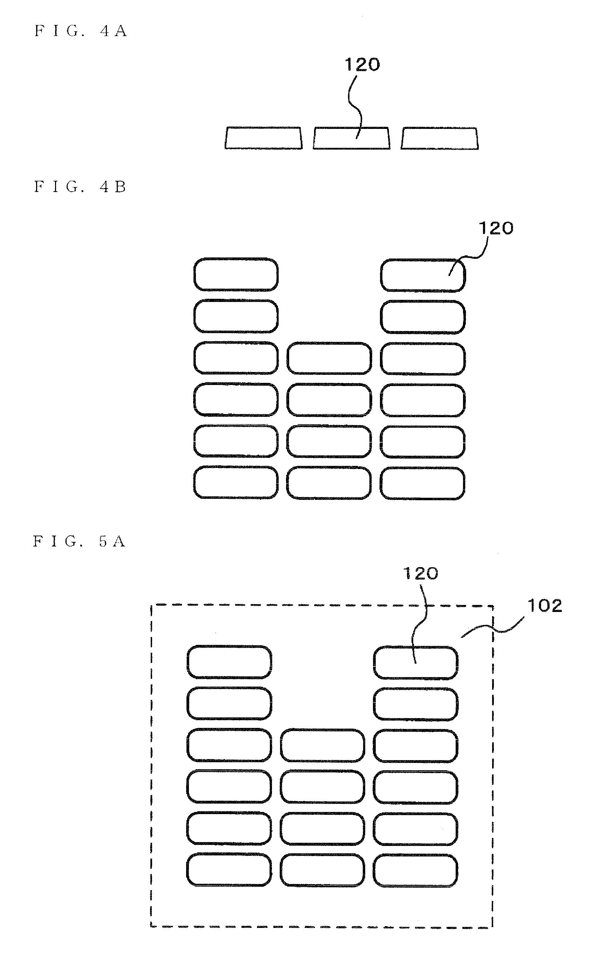

Fig. 1 is a conceptual diagram for explaining the step of heating the resin member 100; Fig. 1A is a conceptual diagram of the step of heating the resin member 100 with heaters 110, 112, and Fig. 1B is a plan view of the resin member 100 which is heated in the step. Fig. 2 is a conceptual diagram for explaining the step of embossing a resin member; Fig. 2A is a conceptual diagram of the step of embossing into a sheet-like resin member 102 including three dimensionally shaped key tops 120 using molds 130, 140, and Fig. 2B is a plan view of the sheet-like resin member 102 including the three dimensionally shaped key tops 120 embossed in the step. Fig. 3 is a conceptual diagram for explaining the step of forming slits 150 along the peripheries of the embossed three dimensionally shaped key tops 120; Fig. 3A is a diagram showing the sheet-like resin member 102 including the three dimensionally shaped key tops 120 having slits 150 formed along the peripheries of the key tops 120 in the step, and Fig. 3B is a plan view of the sheet-like resin member 102 including the three dimensionally shaped key tops 120 having the slits 150 formed in the step. Fig. 4 is a conceptual diagram for explaining the step of separating the key tops 120 from the sheet-like resin member 102 including the key tops 120; Fig. 4A is a diagram showing the key tops 120 separated from the sheet-like resin member 102 including the key tops 120 in the step, and Fig. 4B is a plan view of the key tops 120 separated in the step.

### <Heating Step>

As shown in Figs. 1A and 1B, the resin member 100 prepared is held between the heaters 110, 112 and is heated until the resin member 100 becomes soft. In a case of manufacturing key tops for push button switches of a cellular phone, for example, it is preferable to use a rectangular resin member having a width of 100 mm to 150 mm and a thickness of 1 mm as the resin member and use a transparent polycarbonate resin, as its material, which has a very large impact strength and is excellent in heat resistance, cold resistance and dimensional stability. Although the resin member 100 is held between the heaters 110, 112 and is heated to soften the resin member 100 in the embodiment, it is possible to employ a method of heating the resin member without contacting heaters, e.g., a method of heating it with a halogen lamp of a far infrared wavelength or a method of heating it by placing it on a heater without pressure.

The heating temperature of the heaters 110, 112 varies depending on the thickness or the like of the resin member 100; for example, for a polycarbonate resin member with a thickness of 1 mm, the heat distortion temperature is 132 °C (1.81 MPa) and the resin member 100 is heated to the temperature to soften the resin member using the heaters 110, 112. Therefore, the temperature of the resin member 100 to soften the resin member 100 can be controlled by the heating temperature and pressure of the heaters 110, 112, the thickness of the resin member 100, the material for the resin member, the heating time, or the like, thus ensuring a manufacture method of manufacturing key tops for push button switches which is continuous to a molding step to be described later.

The use of the molds 130, 140 which are used in the molding step to be described later as the heaters 110, 112 can combine the heating step and the molding step into a single step, and simplify the work between the heating step and the molding step, thus ensuring miniaturization of the apparatus and making it possible to stably manufacture a sheet-like resin member including thin key tops for push button switches, thereby improving the yield and ensuring low-cost mass production. Particularly, as the resin member is very thin, it is bowed or stretched at the time of adhering and removing it to and from the heater, but it can minimize the influence on the manufacture of thin key tops for push button switches by combining the heating step and the molding step into a single step.

### <Molding Step>

The molding step is executed following the heating step. Specifically, the softened resin member is not punched out by the molds to provide a molded article, but is embossed to provide an integrally formed sheet-like resin member 102 including the three dimensionally shaped key tops 120 using the molds 130, 140. As shown in Fig. 2A, three dimensionally shaped recesses 132 are provided in the mold 130 to form the three dimensionally shaped key tops 120. The other mold 140 does not have three dimensionally shaped shapes and is flat. Therefore, in the molding step, the softened resin member is embossed and integrally formed into the sheet-like resin member 102 including the three dimensionally shaped key tops 120 as shown in Fig. 2B.

As the softened resin member is integrally formed into the sheet-like resin member 102 including the three dimensionally shaped key tops 120 by embossing the recesses 132 formed in the mold 130 into the resin member, it is unnecessary to execute fine adjustment in the molding step for overcoming defective molding inherent to injection molding, such as inadequate filling of a softened resin and welds, originating from deterioration of the fluidity of the resin at the time of injection molding. It is therefore possible to easily and stably achieve integral formation of the sheet-like resin member 102 including the three dimensionally shaped key tops 120 having the desired accuracy of form and dimensional accuracy.

In the molding step, the softened resin member is merely embossed by the molds, so that the molded article can be made as thin as possible. Therefore, the molded article can be thinned to the controllable limit to secure the performance demanded of the key tops, for example, the strength thereof, for push button switches as the molded article. In a case of a soft polycarbonate resin member, for example, if it is less than 0.6 mm in thickness, cracks may be formed after being cooled due to the insufficient strength, so that the polycarbonate resin member can be integrally formed into a sheet-like resin member including key tops for thin push button switches with the control value of 0.6 mm.

### <Cooling Step>

Following the molding step, the sheet-like resin member 102 is cooled until it is hardened to form the slits 150 in the integrally formed sheet-like resin member 102 including the key tops 120 for push button switches.

### <Slit Forming Step>

Following the cooling step, a slit forming step is performed to form the slits 150 at least partially along peripheries of the three dimensionally shaped key tops 120 in the sheet-like resin member 102 including the key tops 120 for push button switches. Because the resin member is cooled so that the slits 150 can be formed therein, the slits 150 can be formed accurately along the peripheries of the key tops 120. The slits 150 are formed by, for example, a punching molding method using a punch die.

Fig. 3B is a diagram showing one example of forming the slits 150 along the peripheries of the key tops 120 for push button switches. As shown in Fig. 3B, link portions 160 which link between the key tops 120 and between the key tops 120 and the resin member 102 are provided, and the slits 150 are formed along the peripheries of the key tops 120 excluding the link portions 160. Therefore, the link portions 160 to be formed can be minimized, and it can integrally decorate the resin member 102 including the key tops 120 in a decoration step while preventing the key tops 120 from being separated from the resin member 102, and can allow the key tops 120 to be easily separated from the resin member 102 after decoration by formation of the multiple slits 150.

### <Decoration Step>

After the formation of the slits 150, the resin member 102 including the key tops 120 for push button switches having the slits 150 formed therein is decorated by publicly-known printing, spray coating or the like. Therefore, if maximum slits are formed along the peripheries of the key tops 120 in the slit forming step for the purpose of preventing the key tops 120 from being separated from the resin member 102, it is possible to efficiently decorate even the side surfaces of the key tops 120 as well as easily separate the key tops 120 from the resin member 102.

As described above, executing the heating step, the molding step and cooling step, and the decoration step makes it possible to easily and stably manufacture the resin member 102 including the thin key tops 120 for push button switches having the desired accuracy of form and dimensional accuracy through a continuous sequence of steps without requiring fine adjustment. As a result, the resin member 102 including the thin key tops 120 for push button switches can be manufactured stably, thereby improving the yield and ensuring low-cost mass production.

Further, unlike in injection molding, it can cope with the design change of thin key tops 120 for push button switches by changing the recesses 132 formed in the mold 130, 140 which is used in embossment, and the profile accuracy to align two sides of the injection molds with each other is not required. As compared with the injection molding, therefore, the cost for molding becomes lower, thereby ensuring a design change while minimizing the cost involved in the design change.

### <Separation Step>

Then, as shown in Figs. 4A and 4B, the decorated key tops 120 for push button switches are separated from the resin member 102. As the maximum slits 150 are formed along the peripheries of the key tops 120 in the slit forming step, the decorated key tops can be easily separated from the resin member. The slits 150 are formed by, for example, a punching molding method using a punch die.

### <Key Tops for Push Button Switches>

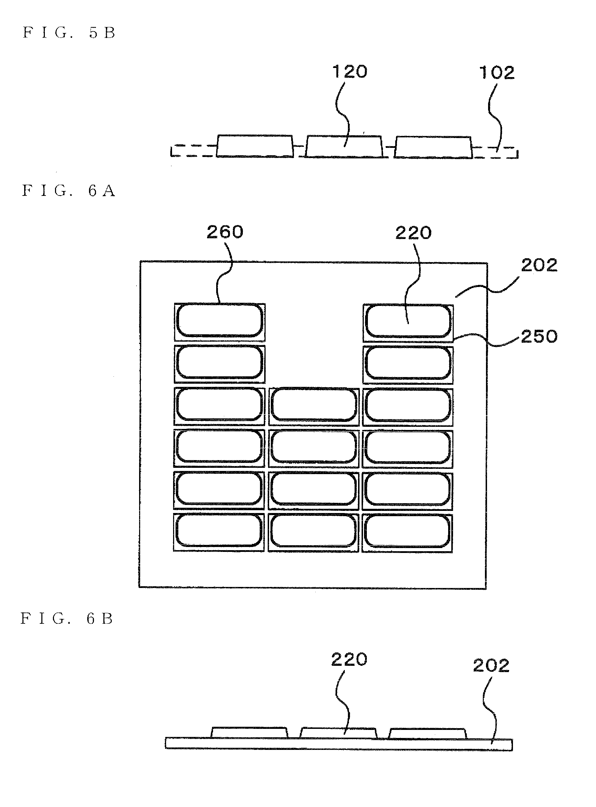

Fig. 5 shows the thin key tops 120 for push button switches manufactured by the method of manufacturing key tops for push button switches according to the first embodiment of the invention. In Fig. 5, the portion indicated by the broken line indicates the resin member separated in the separation step. A key sheet for push button switches can be fabricated by adhering the manufactured thin key tops 120 for push button switches to a resilient member of silicone rubber or the like to be a key base.

To manufacture the key tops 120 to be separated from the resin member 102 this way, it is preferable to form the maximum slits 150 along the peripheries of the key tops 120 in the slit forming step of the first embodiment of the invention in such a way as to be able to easily separate the key tops 120 from the resin member 102 and efficiently decorate even the side surfaces of the key tops 120.

The separation step may not be performed in the method of manufacturing key tops for push button switches according to the first embodiment of the invention. Fig. 6 shows one example of a resin member 202 including key tops 220 for push button switches as a molded article in a case where the separation step is not performed. As shown in Fig. 6A, link portions 260 which link between the tops 220 and the resin member 202 are provided at one of the four sides of the key tops along the peripheries thereof, and slits 250 are formed along the three sides of the key tops 220 excluding the link portions 260, and then the resin member including the key tops 220 is integrally decorated in the decoration step. Then, a resin member including the key tops 220 is provided without separating the key tops 220 from the sheet-like resin member 202. This makes it possible to easily and stably manufacture the resin member 202 including the key tops 220 as a key sheet including the key tops 220 tilt-able with respect to the sheet-like resin member 202 with the link portions 260 serving as a hinge mechanism, through a continuous sequence of steps.

### «Second Embodiment»

A method of manufacturing key tops for push button switches according to the second embodiment of the invention includes the same steps as the manufacture method according to the first embodiment of the invention, except that the slit forming step and the separation step are not included. Therefore, a resin member 302 including thin key tops 320 for push button switches formed without causing welds or the like inherent to injection molding can be manufactured as a key sheet including the key tops 320 easily and stably through a continuous sequence of steps.

### <Key Tops for Push Button Switches>

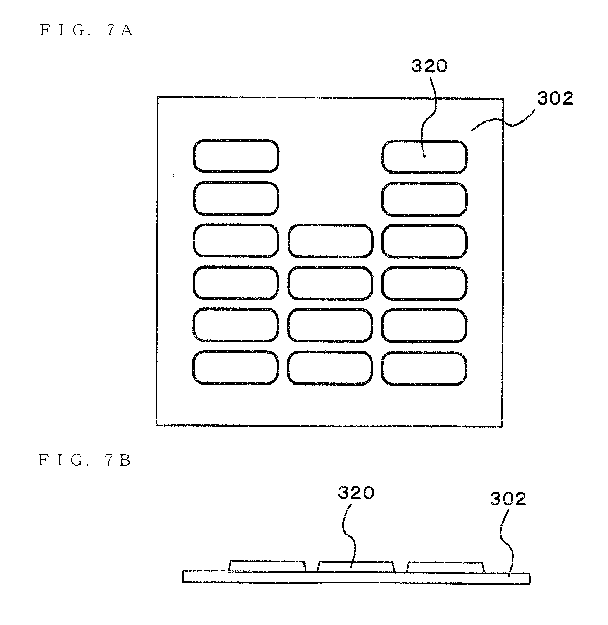

Fig. 7 shows the resin member 302 including the thin key tops 320 for push button switches manufactured by the method of manufacturing key tops for push button switches according to the second embodiment of the invention. Because the method of manufacturing key tops for push button switches according to the second embodiment of the invention does not include the slit forming step and the separation step, the key tops 320 are formed on the sheet-like resin member 302. Therefore, a key sheet comprising the key tops 320 and the resin member 302 serving as a key base can be manufactured easily and stably through a continuous sequence of steps.

According to the above-mentioned embodiment, a sheet-like resin member including thin key tops for push button switches having the desired accuracy of form and dimensional accuracy can be performed easily and stably through a continuous sequence of steps without requiring fine adjustment by heating the sheet-like resin member, embossing the resin member using the molds to integrally form a sheet-like resin member including three dimensionally shaped key tops, and decorating the resin member. This makes it possible to stably manufacture a sheet-like resin member including thin key tops for push button switches, thereby improving the yield and ensuring low-cost mass production.

Further, unlike in injection molding, it can cope with the design change of thin key tops for push button switches by changing the three dimensional shapes of the key tops formed in the molds which are used in embossment, and the profile accuracy to align two sides of the injection molds with each other is not required. As compared with the injection molding, therefore, the cost for molding becomes lower, thereby ensuring a design change while minimizing the cost involved in the design change.

Further, the method of manufacturing key tops for push button switches according to the invention is not limited to the above-mentioned embodiments, and includes other various embodiments.

### Description of Reference Numerals

- 100, 200, 300: resin member
- 120, 220, 320: key top
- 110, 112: heater
- 130, 140: mold
- 150, 250: slit
- 160, 260: link portion

## Claims

1. A method of manufacturing key tops for push button switches, including the steps of:
heating a resin member to a first temperature with a heater;
embossing three dimensional shapes formed in a first mold and/or a second mold into the resin member heated to the first temperature by using the first mold and the second mold to integrally form the resin member into a sheet-like resin member including three dimensionally shaped key tops;
cooling the integrally formed sheet-like resin member including the key tops to a predetermined second temperature;
forming slits at least partially along peripheries of the three dimensionally shaped key tops in the sheet-like resin member including the key tops, which is cooled to the second temperature; and
decorating the integrally formed sheet-like resin member including the key tops having the formed slits,
wherein the three dimensionally shaped key tops have a first face facing the first mold and a second face facing the second mold, with a predetermined gap provided between the first face and the second face.

2. The method according to the claim 1, further including the step of separating the three dimensionally shaped key tops from the decorated sheet-like resin member.

3. A method of manufacturing key tops for push button switches, including the steps of:
heating a resin member to a first temperature with a heater;
embossing three dimensional shapes formed in a first mold and/or a second mold into the resin member heated to the first temperature by using the first mold and the second mold to integrally form the resin member into a sheet-like resin member including three dimensionally shaped key tops; and
decorating the integrally formed sheet-like resin member including the key tops,
wherein the three dimensionally shaped key tops have a first face facing the first mold and a second face facing the second mold, with a predetermined gap provided between the first face and the second face.

4. The method according to any one of the claims 1 to 3, wherein the first mold and the second mold are the heater.
